# EUROPEAN PATENT APPLICATION

(11) **EP 4 654 517 A1**
(43) Date of publication of application: **26.11.2025**
(21) Application number: 23922395.1
(22) Date of filing: 13.11.2023
(51) Int. Cl.: H04L 7/00

(54) **TAMPER-RESISTANCE PROTECTION METHOD AND APPARATUS, AND VEHICLE**

(30) Priority: 13.02.2023 CN 202310146295
(71) Applicant: Shenzhen Yinwang Intelligent Technologies Co., Ltd., Shenzhen, Guangdong 518110 (CN)
(72) Inventor: ZHANG, Yan, Shenzhen, Guangdong 518129 (CN); XU, Mao, Shenzhen, Guangdong 518129 (CN)
(74) Representative: Körber, Martin Hans
(86) International application number: PCT/CN2023/131223
(87) International publication number: WO 2024/169279

(57) **Abstract**

Embodiments of this application provide an anti-tampering protection method and apparatus, and a means of delivery. The method includes: obtaining first system time of a network device and second system time of the means of delivery; activating a license based on the second system time when the second system time is later than the first system time; and sending first indication information to the network device, where the first indication information includes the second system time. According to the method, when there is no network or a network condition is poor, the means of delivery may activate the license based on the system time of the means of delivery, so that driving experience of a user can be improved while use security of the license is ensured.

## Description

This application claims priority to Chinese Patent Application No. 202310146295.2, filed with the China National Intellectual Property Administration on February 13, 2023 and entitled "ANTI-TAMPERING PROTECTION METHOD AND APPARATUS, AND MEANS OF DELIVERY", which is incorporated herein by reference in its entirety.

### TECHNICAL FIELD

Embodiments of this application relate to the field of intelligent vehicles, and more specifically, to an anti-tampering protection method and apparatus, and a means of delivery.

### BACKGROUND

As intelligent vehicles are widely used in daily life, users expect that the intelligent vehicles and related devices can bring more comfortable intelligent experience. In this context, a license technology emerges. A license can be used in a commercial scenario like software usage. Because commercial paid operations are related, a requirement on security of a design for the license is high. Anti-tampering protection of system time is very important.

However, in an existing anti-tampering protection solution, validity time of the license is completely based on cloud system time. When a network connection is poor, a delay occurs when a vehicle obtains the time from a cloud. In addition, if a network fault occurs, the vehicle end cannot obtain the system time from the cloud, and the license cannot be activated. Consequently, driving experience of a user is poor. Therefore, how to improve driving experience of the user while ensuring use security of the license is an urgent problem to be resolved.

### SUMMARY

Embodiments of this application provide an anti-tampering protection method and apparatus, and a means of delivery, to improve driving experience of a user while ensuring use security of a license.

According to a first aspect, an anti-tampering protection method is provided, where the method includes: obtaining first system time of a network device and second system time of a means of delivery; activating a license based on the second system time when the second system time is later than the first system time; and sending first indication information to the network device, where the first indication information includes the second system time.

Optionally, the means of delivery may obtain the first system time when there is no network connection or a network connection is poor. To be specific, when the network connection is good, the network device sends the first system time to the means of delivery, and the means of delivery securely stores the first system time. When there is no network connection or the network connection is poor, the means of delivery may obtain the locally stored first system time.

Optionally, the means of delivery may alternatively activate the license based on the second system time when the network connection is good.

In this application, the first system time may be referred to as cloud system time, the second system time may be referred to as local system time or vehicle-end system time, and the network device may be referred to as a server. The activating a license may be understood as: After the license is activated, the means of delivery may obtain authorization of the license to process a service.

In this embodiment of this application, when there is no network or a network condition is poor, the means of delivery may activate the license based on the system time of the means of delivery. In this way, driving experience of a user can be improved while use security of the license is ensured.

With reference to the first aspect, in some implementations of the first aspect, before the obtaining first system time and second system time of a means of delivery, the method further includes: receiving second indication information sent by the network device, where the second indication information includes the first system time; activating the license based on the first system time; and sending third indication information to the network device, where the third indication information indicates an activation status of the license.

The activation status of the license may be understood as whether the license is activated.

In this embodiment of this application, the means of delivery may activate the license based on the first system time, and report the activation status of the license to the network device. In this way, the means of delivery may use the first system time as last synchronization time of the means of delivery, so that the means of delivery determines, based on the last synchronization time, whether to activate the license based on the second system time.

With reference to the first aspect, in some implementations of the first aspect, the method further includes: obtaining fourth indication information sent by the network device, where the fourth indication information includes third system time of the network device, and the third system time is later than the first system time; and storing the third system time.

In this embodiment of this application, after the means of delivery reports the second system time to the network device, if the fourth indication information can be obtained, it indicates that verification on the second system time performed by the network device is succeeded, and the means of delivery may locally store the third system time, to complete synchronization of the local system time.

With reference to the first aspect, in some implementations of the first aspect, the method further includes: storing the second system time when fourth indication information sent by the network device is not obtained within preset duration, where the fourth indication information includes third system time of the network device, and the third system time is later than the first system time.

Optionally, the foregoing storing the second system time when the fourth indication information sent by the network device is not obtained within the preset duration may be replaced with storing the second system time when a quantity of times that the means of delivery requests to reconnect to the network device is greater than or equal to a preset quantity of times.

In this embodiment of this application, when the means of delivery does not obtain, within the preset duration, the fourth indication information sent by the network device, it indicates that the means of delivery has no network connection or a poor network connection. In this case, the means of delivery may store the second system time, and continue to process the service by using the license activated based on the second system time.

With reference to the first aspect, in some implementations of the first aspect, the method further includes: obtaining fifth indication information sent by the network device, where the fifth indication information indicates an abnormality of the second system time and a period of usage of the license; and using, based on the fifth indication information, the license to process a service within the period of usage.

For example, if the fifth indication information indicates an abnormality of the second system time and that the period of usage of the license is one day, after receiving the fifth indication information, the means of delivery may use, to process the service within one day, the license activated based on the second system time.

In this embodiment of this application, after the means of delivery receives the fifth indication information, the means of delivery may use the license to process the service within the period of usage indicated by the fifth indication information. In this way, when the second system time is abnormal, plenty of time may be reserved for the user to process an abnormality (for example, the user drives the means of delivery to a 4S store for repair), to avoid a case that some functions of the means of delivery cannot be used in a process of processing the abnormality by the user.

With reference to the first aspect, in some implementations of the first aspect, the method further includes: obtaining a timing periodicity of a timer, where the timer is located in the means of delivery; obtaining fourth system time of the means of delivery when the timing periodicity starts; obtaining fifth system time of the means of delivery when the timing periodicity ends, where the fifth system time is later than the fourth system time; and determining, based on the timing periodicity, the fourth system time, and the fifth system time, whether the second system time is abnormal.

For example, the timing periodicity of the timer may be set to T, the fourth system time is t₁, and the fifth system time is t₂, and whether a value of |T-(t₂-t₁)| is less than a threshold is determined, to determine whether the second system time is abnormal. To be specific, if the value of |T-(t2-t1)| is less than the threshold, it is determined that the second system time is normal; otherwise, the second system time is abnormal.

Optionally, if the means of delivery determines that the second system time is normal, the means of delivery may continue to use the activated license to process the service. If the means of delivery determines that the second system time is abnormal, the means of delivery may use the activated license to process the service within the preset duration (for example, one day), or the means of delivery may immediately stop using the activated license to process the service.

In this embodiment of this application, the means of delivery may use the timer to verify whether the local system time is abnormal, and determine whether to continue to use the activated license to process the service. In this way, the use security of the license can be further ensured.

According to a second aspect, an anti-tampering protection method is provided, where the method includes: obtaining first indication information sent by a means of delivery, where the first indication information includes second system time of the means of delivery; and determining, based on first system time of a network device and the second system time, whether the second system time is abnormal.

In this embodiment of this application, after receiving the second system time, the network device may verify, based on the first system time, whether the second system time is tampered with, to use different processing strategies. In this way, use security of a license can be ensured.

With reference to the second aspect, in some implementations of the second aspect, the determining, based on first system time of a network device and the second system time, whether the second system time is abnormal includes: when a difference between the first system time and the second system time is less than or equal to a preset threshold, determining that the second system time is normal; and when the difference between the first system time and the second system time is greater than the preset threshold, determining that the second system time is abnormal.

With reference to the second aspect, in some implementations of the second aspect, the determining, based on first system time of a network device and the second system time, whether the second system time is abnormal includes: when the first system time is consistent with the second system time, determining that the second system time is normal; and when the first system time is inconsistent with the second system time, determining that the second system time is abnormal.

With reference to the second aspect, in some implementations of the second aspect, before the receiving first indication information sent by a means of delivery, the method further includes: sending second indication information to the means of delivery, where the second indication information includes the first system time; and receiving third indication information sent by the means of delivery, where the third indication information indicates an activation status of a license.

The activation status of the license may be understood as whether the license is activated.

In this embodiment of this application, before the network device receives the first indication information, the network device may deliver the first system time to the means of delivery, so that the means of delivery activates the license and synchronizes the first system time based on the first system time.

With reference to the second aspect, in some implementations of the second aspect, the method further includes: when the second system time is normal, sending fourth indication information to the means of delivery, where the fourth indication information includes third system time of the network device, and the third system time is later than the first system time.

In this embodiment of this application, when the network device determines that the second system time is normal, the network device may send the third indication information to the means of delivery, so that the means of delivery stores the third system time and completes time synchronization.

With reference to the second aspect, in some implementations of the second aspect, the method further includes: when the second system time is abnormal, sending fifth indication information to the means of delivery, where the fifth indication information indicates an abnormality of the second system time and a period of usage of the license.

In this embodiment of this application, when the network device determines that the second system time is normal, the network device may send the fifth indication information to the means of delivery, so that the means of delivery can use the license to process a service within the period of usage, and plenty of time is reserved for a user to process the abnormality.

According to a third aspect, an anti-tampering protection apparatus is provided, and the apparatus includes a processing unit and a transceiver unit. The processing unit is configured to: obtain first system time of a network device and second system time of a means of delivery, and activate a license based on the second system time when the second system time is later than the first system time; and the transceiver unit is configured to send first indication information to the network device, where the first indication information includes the second system time.

With reference to the third aspect, in some implementations of the third aspect, the transceiver unit is further configured to receive second indication information sent by the network device, where the second indication information includes the first system time; the processing unit is further configured to activate the license based on the first system time; and the transceiver unit is further configured to send third indication information to the network device, where the third indication information indicates an activation status of the license.

With reference to the third aspect, in some implementations of the third aspect, the processing unit is further configured to: obtain fourth indication information sent by the network device, where the fourth indication information includes third system time of the network device, and the third system time is later than the first system time; and store the third system time.

With reference to the third aspect, in some implementations of the third aspect, the processing unit is further configured to store the second system time when fourth indication information sent by the network device is not obtained within preset duration, where the fourth indication information includes third system time of the network device, and the third system time is later than the first system time.

With reference to the third aspect, in some implementations of the third aspect, the processing unit is further configured to: obtain fifth indication information sent by the network device, where the fifth indication information indicates an abnormality of the second system time and a period of usage of the license; and use, based on the fifth indication information, the license to process a service within the period of usage.

With reference to the third aspect, in some implementations of the third aspect, the processing unit is further configured to: obtain a timing periodicity of a timer, where the timer is located in the means of delivery; obtain fourth system time of the means of delivery when the timing periodicity starts; obtain fifth system time of the means of delivery when the timing periodicity ends, where the fifth system time is later than the fourth system time; and determine, based on the timing periodicity, the fourth system time, and the fifth system time, whether the second system time is abnormal.

According to a fourth aspect, an anti-tampering protection apparatus is provided, and the apparatus includes a processing unit. The processing unit is configured to: obtain first indication information sent by a means of delivery, where the first indication information includes second system time of the means of delivery; and determine, based on first system time of a network device and the second system time, whether the second system time is abnormal.

With reference to the fourth aspect, in some implementations of the fourth aspect, the processing unit is specifically configured to: when a difference between the first system time and the second system time is less than or equal to a preset threshold, determine that the second system time is normal; and when the difference between the first system time and the second system time is greater than the preset threshold, determine that the second system time is abnormal.

With reference to the fourth aspect, in some implementations of the fourth aspect, the apparatus further includes a transceiver unit. The transceiver unit is configured to: send second indication information to the means of delivery, where the second indication information includes the first system time; and receive third indication information sent by the means of delivery, where the third indication information indicates an activation status of a license.

With reference to the fourth aspect, in some implementations of the fourth aspect, the transceiver unit is further configured to: when the second system time is normal, send fourth indication information to the means of delivery, where the fourth indication information includes third system time of the network device, and the third system time is later than the first system time.

With reference to the fourth aspect, in some implementations of the fourth aspect, the transceiver unit is further configured to: when the second system time is abnormal, send fifth indication information to the means of delivery, where the fifth indication information indicates an abnormality of the second system time and a period of usage of the license.

According to a fifth aspect, an anti-tampering protection apparatus is provided, where the apparatus includes at least one processor and a memory, and the at least one processor is coupled to the memory, and is configured to read and execute instructions in the memory, so that the apparatus implements the method according to any one of the first aspect and the implementations of the first aspect or the second aspect and the implementations of the second aspect.

According to a sixth aspect, a computer-readable storage medium is provided, where the computer-readable storage medium stores program code, and when the computer program code is run on a computer, the computer is enabled to perform the method according to any one of the first aspect and the implementations of the first aspect or the second aspect and the implementations of the second aspect.

According to a seventh aspect, a chip is provided, where the chip includes a circuit, and the circuit is configured to perform the method according to any one of the first aspect and the implementations of the first aspect or the second aspect and the implementations of the second aspect.

According to an eighth aspect, a means of delivery is provided, including the anti-tampering protection apparatus according to any one of the third aspect and the implementations of the third aspect.

According to a ninth aspect, a server is provided, including the anti-tampering protection apparatus according to any one of the fourth aspect and the implementations of the fourth aspect.

### BRIEF DESCRIPTION OF DRAWINGS

FIG. 1 is a functional diagram of a means of delivery according to an embodiment of this application;
FIG. 2 is a diagram of a system architecture to which an anti-tampering protection method is applicable according to an embodiment of this application;
FIG. 3 is a schematic flowchart of an anti-tampering protection method according to an embodiment of this application;
FIG. 4 is a schematic flowchart of another anti-tampering protection method according to an embodiment of this application;
FIG. 5 is a schematic flowchart of still another anti-tampering protection method according to an embodiment of this application;
FIG. 6 is a schematic flowchart of yet another anti-tampering protection method according to an embodiment of this application;
FIG. 7 is a schematic flowchart of still yet another anti-tampering protection method according to an embodiment of this application;
FIG. 8 is a diagram of an anti-tampering protection apparatus according to an embodiment of this application; and
FIG. 9 is a diagram of another anti-tampering protection apparatus according to an embodiment of this application.

### DESCRIPTION OF EMBODIMENTS

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, at least one means one or more, and a plurality of means two or more. At least one of the following items (pieces) or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

The following describes technical solutions of embodiments in this application with reference to accompanying drawings.

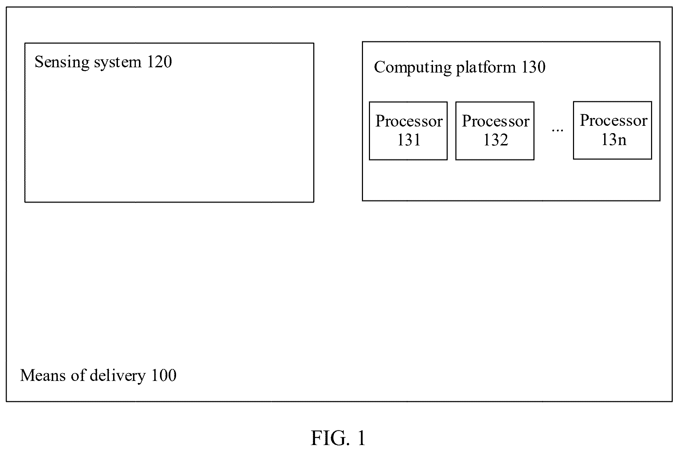

FIG. 1 is a functional diagram of a means of delivery 100 according to an embodiment of this application.

The means of delivery 100 may include a plurality of subsystems, such as a sensing system 120 and a computing platform 130. Optionally, the means of delivery 100 may include more or fewer subsystems, and each subsystem may include one or more components. In addition, all subsystems and components of the means of delivery 100 may be interconnected in a wired or wireless manner.

The sensing system 120 may include several types of sensors used to sense information about an ambient environment of the means of delivery 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter wave radar, an ultrasonic radar, and a camera apparatus.

Some or all of functions of the means of delivery 100 may be controlled by the computing platform 130. The computing platform 130 may include processors 131 to 13n (n is a positive integer). The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory, to implement corresponding functions.

The computing platform 130 may control the functions of the means of delivery 100 based on inputs received from various subsystems (for example, the sensing system 120). For example, the computing platform 130 can control, based on an input received from the sensing system 120, a vehicle door of the means of delivery to be open or closed. In some embodiments, the computing platform 130 may be configured to control many aspects of the means of delivery 100 and the subsystems of the means of delivery.

Optionally, the foregoing components are merely examples. During actual application, components in the foregoing modules may be added or removed based on an actual requirement. FIG. 1 should not be understood as a limitation on embodiments of this application.

The means of delivery 100 in this application may include a road transportation means, a water transportation means, an air transportation means, an industrial device, an agricultural device, an entertainment device, or the like. For example, the means of delivery 100 may be a vehicle. The vehicle is a vehicle in a broad sense, and may be a transportation means (like a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the means of delivery 100 may be a transportation means like an aircraft or a ship.

The following uses an example in which the means of delivery 100 is a vehicle, to describe a technical problem that needs to be resolved in this application and technical solutions used in this application.

As intelligent vehicles are widely used in daily life, users expect that the intelligent vehicles and related devices can bring more comfortable intelligent experience. In this context, a license technology emerges. A license can be used to provide diversified and flexible business models and operation modes for the intelligent vehicles, so that loyalty of vehicle owners for vehicle manufacturers can be improved and vehicle use experience of the vehicle owners can be improved. The license is mainly used in a commercial scenario like software usage. Therefore, a requirement on security of a design for the license is high. A license file, a license public key, system time, and vehicle component information are key assets of the license and need to be protected, and security of the assets needs to be hardened. If an attacker tampers with the system time, validity time of the license may be illegally prolonged, resulting in economic losses to a vehicle manufacturer operator. Therefore, anti-tampering protection of the system time is very important.

However, in an existing anti-tampering protection solution, the validity time of the license is completely based on cloud system time. When a network connection is poor, a delay occurs when the vehicle obtains the time from a cloud. In addition, if a network fault occurs, the vehicle end cannot obtain the system time from the cloud, and the license cannot be activated. Consequently, driving experience of a user is poor. In addition, if the cloud periodically delivers the system time to the vehicle end, and the vehicle end periodically synchronizes the time on the cloud in a timing manner, an amount of information delivered by the cloud increases as a quantity of vehicles increases, resulting in a huge waste of air interface bandwidth resources and resource overheads of the license on the cloud. Therefore, how to ensure secure use of the license while effectively improving user experience is an urgent problem to be resolved.

Embodiments of this application provide an anti-tampering protection method and apparatus, and a means of delivery, to ensure secure use of a license while effectively improving user experience.

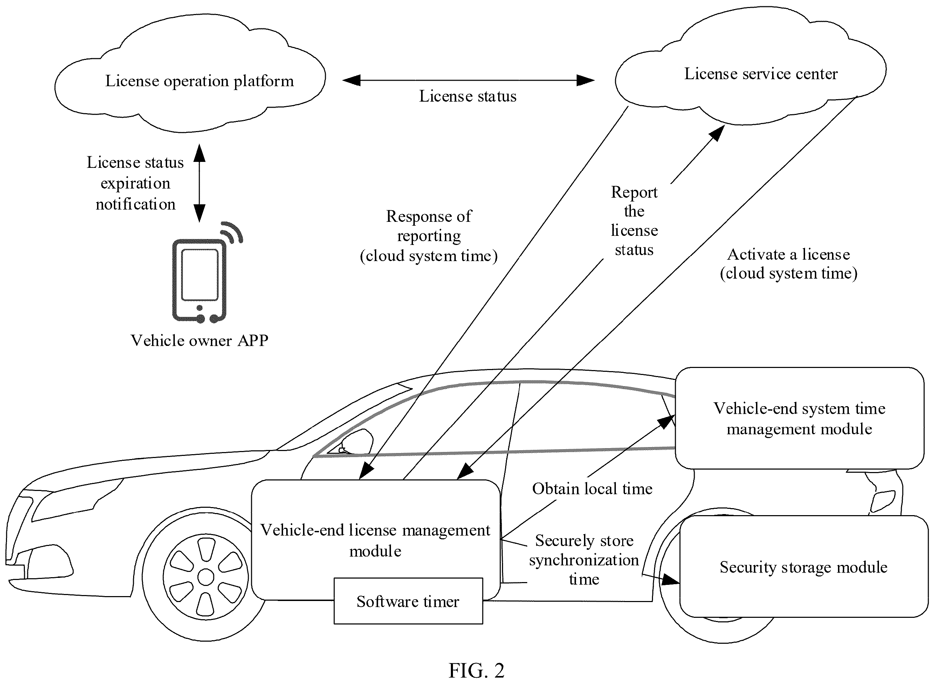

FIG. 2 is a diagram of a system architecture to which an anti-tampering protection method is applicable according to an embodiment of this application.

As shown in FIG. 2, the system architecture includes a mobile phone, a license operation platform, a license service center, and a vehicle. The license operation platform may receive an order of a user from a vehicle owner application (application, APP) on a mobile phone, and push the order to the license service center after confirming the order, and then the license service center delivers the order to the vehicle. In addition, the license operation platform may receive license status information sent by the license service center, and configure information about a marketable license and the like. The license service center can interconnect with a license order system of a vehicle manufacturer, to handle license issuance applications in various application scenarios and monitor a license status. The vehicle may include a vehicle-end license management module, a vehicle-end system time management module, and a security storage module. The vehicle-end license management module may exchange information with the license service center, to implement vehicle-end license management, including: managing license download, verification, activation, status reporting, time anti-tampering, time secure storage, and the like. The vehicle-end system time management module can provide information about vehicle-end system time. The security storage module may securely store time synchronized at a vehicle end.

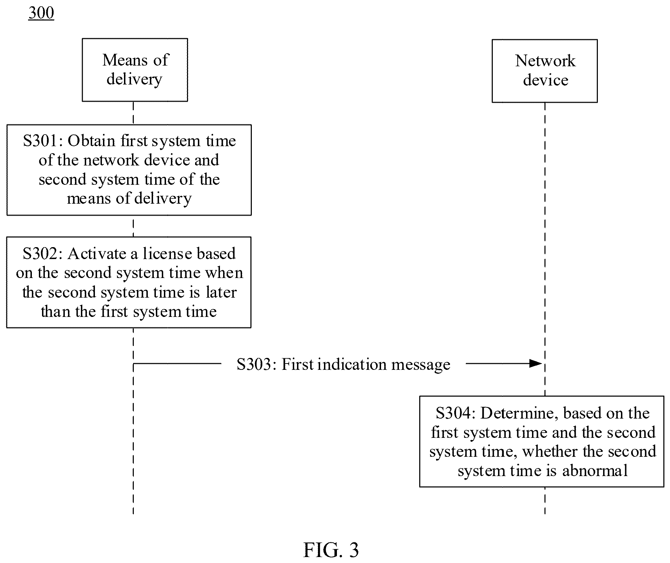

FIG. 3 is a schematic flowchart of an anti-tampering protection method according to an embodiment of this application. The method 300 may include steps S301 to S304.

S301: A means of delivery obtains first system time of a network device and second system time of the means of delivery.

Optionally, the means of delivery may obtain the first system time when there is no network connection or a network connection is poor. To be specific, when the network connection is good, the network device sends the first system time to the means of delivery, and the means of delivery securely stores the first system time. When there is no network connection or the network connection is poor, the means of delivery may obtain the locally stored first system time.

In an embodiment, before step S301, the method 300 further includes: The means of delivery receives second indication information sent by the network device, where the second indication information includes the first system time; the means of delivery activates a license based on the first system time; and the means of delivery sends third indication information to the network device, where the third indication information indicates an activation status of the license. In this way, the means of delivery may use the first system time as last synchronization time of the means of delivery, so that the means of delivery determines, based on the last synchronization time, whether to activate the license based on the second system time.

The activation status of the license may be understood as whether the license is activated.

In this application, the first system time may be referred to as cloud system time, the second system time may be referred to as local system time or vehicle-end system time, and the network device may be referred to as a server.

S302: The means of delivery activates the license based on the second system time when the second system time is later than the first system time.

Activating the license may be understood as: After the license is activated, the means of delivery may obtain a license authorization to process a service.

Optionally, the means of delivery may alternatively activate the license based on the second system time when the network connection is good.

S303: The means of delivery sends first indication information to the network device.

The first indication information includes the second system time.

S304: The network device determines, based on the first system time and the second system time, whether the second system time is abnormal.

In this embodiment of this application, when there is no network or a network condition is poor, the means of delivery may activate the license based on the system time of the means of delivery. In this way, driving experience of a user can be improved while use security of the license is ensured.

In step S304, the network device may determine, in different manners, whether the second system time is abnormal.

In an embodiment, when a difference between the first system time and the second system time is less than or equal to a preset threshold, the network device may determine that the second system time is normal; and when the difference between the first system time and the second system time is greater than the preset threshold, the network device may determine that the second system time is abnormal.

In an embodiment, when the first system time is consistent with the second system time, the network device may determine that the second system time is normal; and when the first system time is inconsistent with the second system time, the network device may determine that the second system time is abnormal.

After determining that the second system time is normal or abnormal, the network device may notify the means of delivery of a verification result of the second system time via indication information, and the means of delivery may perform different processing based on the verification result.

In an embodiment, when the second system time is normal, the network device may send fourth indication information to the means of delivery, where the fourth indication information includes third system time of the network device, and the third system time is later than the first system time. After obtaining the fourth indication information, the means of delivery may store the third system time, to complete synchronization of the local system time.

In an embodiment, when the means of delivery does not obtain, within preset duration, fourth indication information sent by the network device, the means of delivery may store the second system time, and continue to process the service by using the license activated based on the second system time.

Optionally, the foregoing storing the second system time when the fourth indication information sent by the network device is not obtained within the preset duration may be replaced with storing the second system time when a quantity of times that the means of delivery requests to reconnect to the network device is greater than or equal to a preset quantity of times.

In an embodiment, when the second system time is abnormal, the network device may send fifth indication information to the means of delivery, where the fifth indication information indicates an abnormality of the second system time and a period of usage of the license. After obtaining the fifth indication information, the means of delivery may use the license to process the service within the period of usage based on the fifth indication information. In this way, when the second system time is abnormal, plenty of time may be reserved for the user to process an abnormality (for example, the user drives the means of delivery to a 4S store for repair), to avoid a case that some functions of the means of delivery cannot be used in a process of processing the abnormality by the user.

For example, if the fifth indication information indicates an abnormality of the second system time and that the period of usage of the license is one day, after receiving the fifth indication information, the means of delivery may use, to process the service within one day, the license activated based on the second system time.

In addition to learning, based on the indication information sent by the network device, whether the second system time is abnormal, the means of delivery may further verify the second system time.

In an embodiment, the means of delivery obtains a timing periodicity of a timer, where the timer is located in the means of delivery; when the timing periodicity starts, the means of delivery obtains fourth system time of the means of delivery; when the timing periodicity ends, the means of delivery obtains fifth system time of the means of delivery, where the fifth system time is later than the fourth system time; and the means of delivery determines, based on the timing periodicity, the fourth system time, and the fifth system time, whether the second system time is abnormal. In this way, the use security of the license can be further ensured.

For example, the timing periodicity of the timer may be set to T, the fourth system time is t₁, and the fifth system time is t₂, and whether a value of |T-(t₂-t₁)| is less than a threshold is determined, to determine whether the second system time is abnormal. To be specific, if the value of |T-(t₂-t₁)| is less than the threshold, it is determined that the second system time is normal; otherwise, the second system time is abnormal.

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

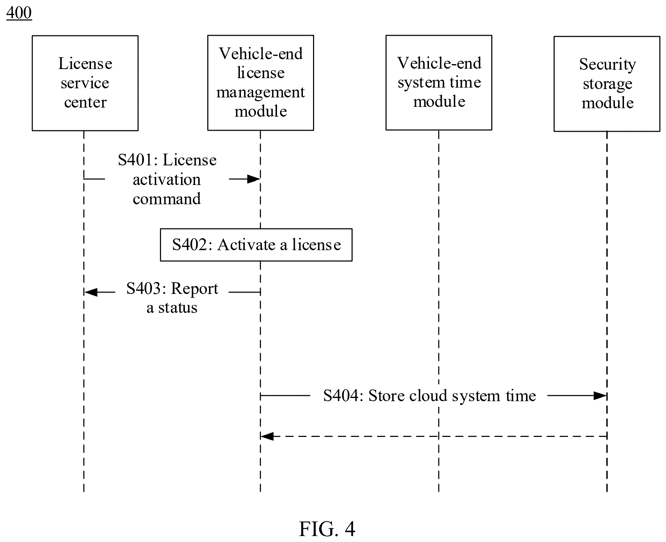

FIG. 4 is a schematic flowchart of another anti-tampering protection method according to an embodiment of this application. In the method 400, the steps S301 to S304 in the method 300 may be specifically described. The method 400 may include the following steps.

S401: A vehicle-end license management module receives a license activation command sent by a license service center.

For example, a command parameter of the license activation command may include cloud system time. The license activation command may be the second indication information in the method 300, and the cloud system time may be the first system time in the method 300.

S402: The vehicle-end license management module activates a license based on the cloud system time.

S403: The vehicle-end license management module reports an activation status of the license to the license service center.

The activation status of the license may be understood as whether the license is activated.

For example, that the vehicle-end license management module reports the activation status of the license to the license service center may be implemented via the third indication information in the method 300.

S404: The vehicle-end license management module sends the cloud system time to a security storage module, and the security storage module stores the cloud system time as last synchronization time of a vehicle.

It should be understood that the license service center may be located in the network device in the method 300, and the vehicle-end license management module, a vehicle-end system time management module, and the security storage module may be located in the means of delivery in the method 300.

In this embodiment of this application, the vehicle-end license management module may activate the license based on the cloud system time, and report the activation status of the license to the license service center. In this way, the vehicle may use the cloud system time as the last synchronization time of the vehicle, so that the vehicle determines, based on the last synchronization time, whether to activate the license based on local system time.

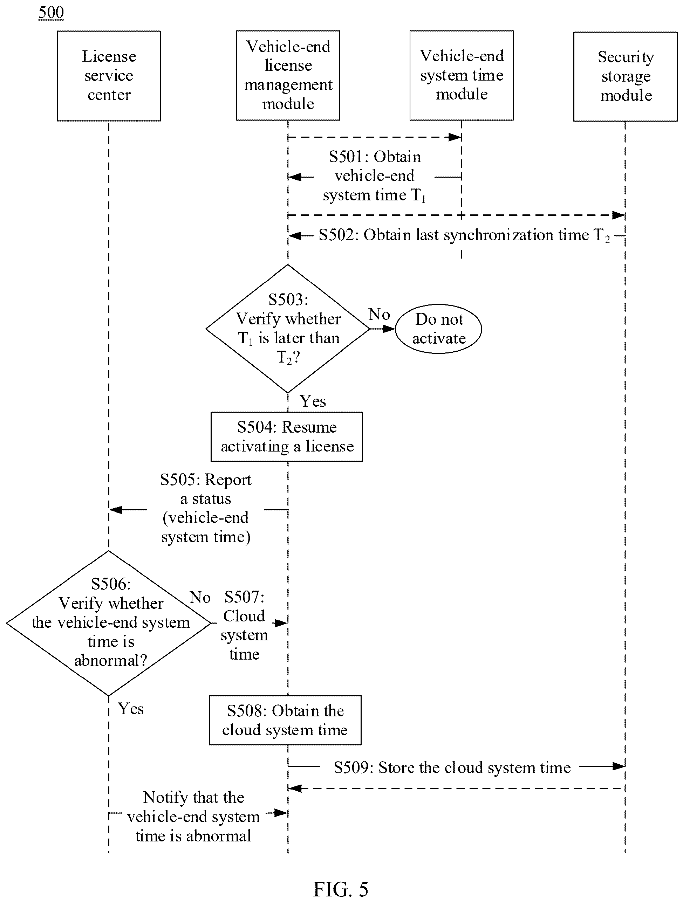

FIG. 5 is a schematic flowchart of another anti-tampering protection method according to an embodiment of this application. In the method 500, the steps S301 to S304 in the method 300 may be specifically described. The method 500 may include the following steps.

S501: A vehicle-end license management module obtains vehicle-end system time T₁ from a vehicle-end system time management module, where the vehicle-end system time T₁ may indicate current vehicle-end time. The vehicle-end system time T₁ may be the second system time in the method 300.

S502: The vehicle-end license management module obtains last synchronization time T₂ from the vehicle-end system time management module. The last synchronization time T₂ may be the first system time in the method 300.

S503: The vehicle-end license management module verifies whether the vehicle-end system time T₁ is later than the last synchronization time T₂. If T₁ is later than T₂, step S504 is performed; otherwise, it indicates that time of a vehicle is abnormal, and the vehicle-end license management module does not activate a license.

S504: The vehicle-end license management module resumes activating the license.

For example, in this step, the vehicle may resume the activating the license based on vehicle-end system time.

S505: The vehicle-end license management module reports a status (including the vehicle-end system time) to a license service center.

That the vehicle-end license management module reports the status to the license service center may be implemented via the first indication information in the method 300.

S506: The license service center verifies whether the vehicle-end system time is abnormal. If the vehicle-end system time is normal, step S507 is performed; otherwise, the license service center notifies the vehicle-end license management module that the vehicle-end system time is abnormal.

The license service center may notify the vehicle-end license management module that the vehicle-end system time is abnormal via the fifth indication information in the method 300.

Optionally, the license service center may further notify the vehicle-end license management module of a period of usage of the license. After the vehicle learns an abnormality of the vehicle-end system time and the period of usage of the license, the vehicle may use the license to process a service within the period of usage.

Optionally, when a difference between cloud system time and the vehicle-end system time is less than or equal to a preset threshold, the license service center may determine that the vehicle-end system time is normal; otherwise, the license service center may determine that the vehicle-end system time is abnormal.

S507: The license service center sends the cloud system time to the vehicle-end license management module.

The cloud system time may be carried in the fourth indication information in the method 300.

S508: The vehicle-end license management module obtains the cloud system time from the license service center.

S509: The vehicle-end license management module sends the cloud system time to a security storage module, and the security storage module stores the cloud system time.

In this embodiment of this application, when there is no network or a network condition is poor, the vehicle may activate the license based on the vehicle-end system time. In this way, driving experience of a user can be improved while use security of the license is ensured.

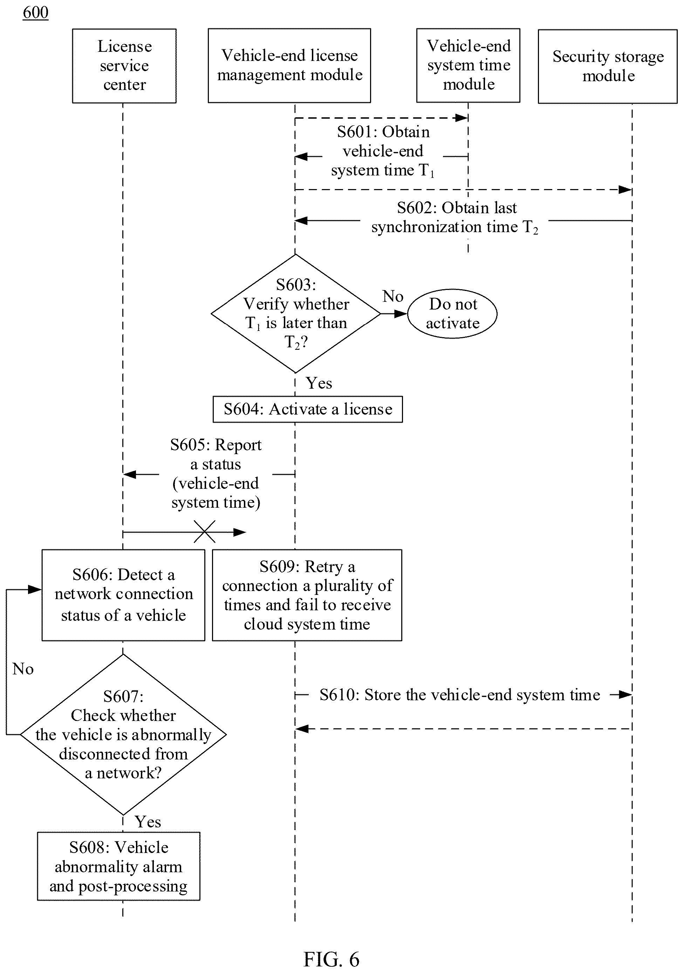

FIG. 6 is a schematic flowchart of another anti-tampering protection method according to an embodiment of this application. In the method 600, the steps S301 to S304 in the method 300 may be specifically described. The method 600 may include the following steps.

S601: A vehicle-end license management module obtains vehicle-end system time T₁ from a vehicle-end system time management module, where the vehicle-end system time T₁ may indicate current vehicle-end time, and the vehicle-end system time T₁ may be the second system time in the method 300.

S602: The vehicle-end license management module obtains last synchronization time T₂ from the vehicle-end system time management module, where the last synchronization time T₂ may be the first system time in the method 300.

S603: The vehicle-end license management module verifies whether the vehicle-end system time T₁ is later than the last synchronization time T₂. If T1 is later than T₂, step S504 is performed; otherwise, it indicates that time of a vehicle is abnormal, and the vehicle-end license management module does not activate a license.

S604: The vehicle-end license management module activates the license.

For example, in this step, the vehicle may resume activating the license based on vehicle-end system time.

S605: The vehicle-end license management module reports a status to a license service center.

That the vehicle-end license management module reports the status to the license service center may be implemented via the first indication information in the method 300.

S606: The license service center detects a network connection status of the vehicle. If it is detected that the vehicle is in a network disconnection state, the license service center cannot return, to the vehicle, a response result of reporting the license status. In this case, step S607 may be performed.

S607: The license service center checks whether a vehicle end is abnormally disconnected from a network. If the vehicle end is abnormally disconnected from the network, step S608 is performed; otherwise, step S606 is performed again.

S608: The license service center performs vehicle abnormality alarm and post-processing.

Specifically, vehicle abnormality alarm and post-processing may be: When detecting that the vehicle can be connected to the network, the license service center sends indication information (for example, the fifth indication information in the method 300) to the vehicle to notify the vehicle of an abnormality of the vehicle-end system time and a period of usage of the license. After obtaining the indication information, the vehicle may use the license to process a service within the period of usage.

S609: If the vehicle-end license management module retries a connection a plurality of times and fails to receive cloud system time, step S610 is performed.

Optionally, if the vehicle end is successfully connected to the network after being started again, and determines, through verification, that time is valid (T1 is later than T2), the vehicle-end license management module may report the license status to the license service center again. If the vehicle-end license management module can receive the cloud system time from the license service center, the vehicle-end license management module sends the cloud system time to a security storage module for storage.

S610: The vehicle-end license management module sends the vehicle-end system time to the security storage module, and the security storage module performs storage.

In this embodiment of this application, if the license is activated based on the vehicle-end system time, the following advantages are obtained: First, regardless of whether the vehicle is connected to the network, a user does not need to be aware of this, and a feature can be normally used within a validity period of the license. Second, when the vehicle is connected to the network but a network condition is poor, the vehicle needs to obtain the cloud system time from the license service center a plurality of times. As a result, the feature of the license is delayed for several seconds or even minutes and then takes effect, and user experience is poor. This case can be avoided in the foregoing method. Third, the license is activated based on local system time, so that information exchange between the vehicle and a cloud can be reduced. The cloud system time can be obtained by using a response message for reporting the status, and the vehicle does not need to add a message to request the cloud system time from the license service center.

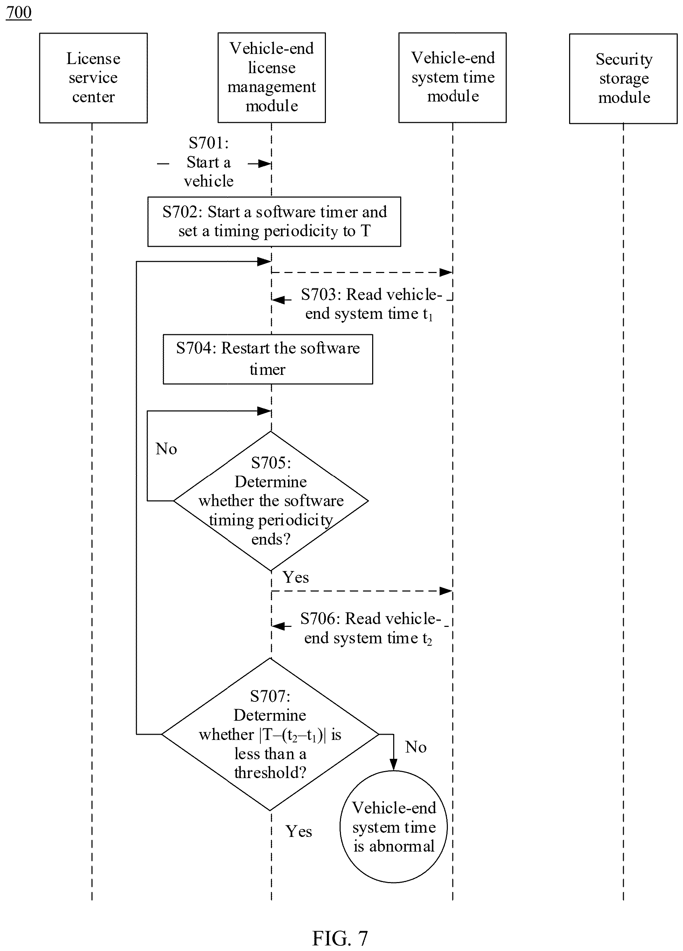

FIG. 7 is a schematic flowchart of another anti-tampering protection method according to an embodiment of this application. In the method 700, the steps S301 to S304 in the method 300 may be specifically described. The method 700 may include the following steps.

S701: A vehicle-end license management module detects that a vehicle is started.

S702: The vehicle-end license management module starts a software timer, and sets a timing periodicity to T.

S703: The vehicle-end license management module reads vehicle-end system time t₁ from a vehicle-end system time module, where the vehicle-end system time t₁ may be the fourth system time in the method 300.

S704: The vehicle-end license management module restarts the software timer.

S705: The vehicle-end license management module determines whether the timing periodicity of the software timer ends. If the timing periodicity ends, step S706 is performed; otherwise, step S705 is periodically performed.

S706: The vehicle-end license management module reads vehicle-end system time t₂ from the vehicle-end system time module, where the vehicle-end system time t₂ may be the fifth system time in the method 300.

S707: The vehicle-end license management module determines whether a value of |T-(t₂-t₁)| is less than a threshold. If the value is less than the threshold, step S703 is periodically performed; otherwise, it may be determined that vehicle-end system time is abnormal, and corresponding alarm processing is performed.

Optionally, after determining that the vehicle-end system time is abnormal, the vehicle may use an activated license to process a service within preset duration (for example, one day), or the vehicle may immediately stop using an activated license to process a service.

In this embodiment of this application, after the vehicle is started, the license management module of the vehicle may start the software timer, set the timing periodicity, and separately read the vehicle-end system time when each period starts and ends, to determine whether the vehicle-end system time is normal.

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

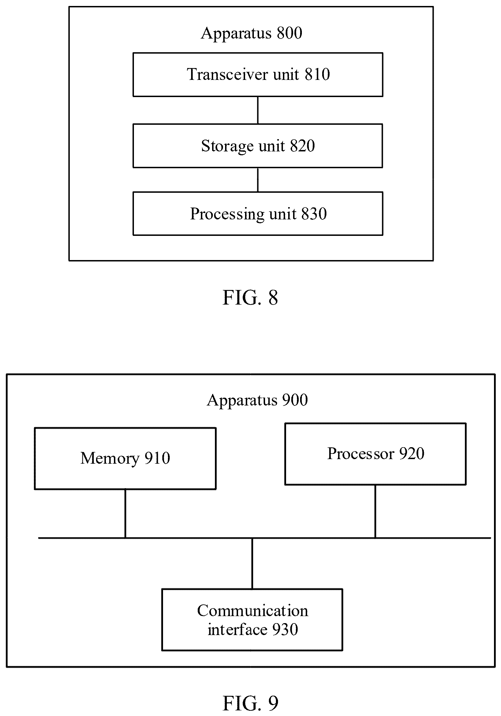

FIG. 8 is a diagram of an anti-tampering protection apparatus 800 according to an embodiment of this application. The apparatus 800 may include a transceiver unit 810, a storage unit 820, and a processing unit 830. The transceiver unit 810 is configured to receive and send instructions and/or data, and the transceiver unit 810 may also be referred to as a communication interface or a communication unit. The storage unit 820 is configured to implement a corresponding storage function, and store corresponding instructions and/or data. The processing unit 830 is configured to perform data processing. The processing unit 830 may read the instructions and/or data in the storage unit 820, so that the apparatus 800 implements the foregoing anti-tampering protection method.

In a design, the apparatus 800 is configured to perform an action performed by the means of delivery in the anti-tampering protection method.

The apparatus 800 includes the processing unit 830 and the transceiver unit 810. The processing unit 830 is configured to: obtain first system time of a network device and second system time of the means of delivery; and activate a license based on the second system time when the second system time is later than the first system time. The transceiver unit 810 is configured to send first indication information to the network device, where the first indication information includes the second system time.

In a possible implementation, the transceiver unit 810 is further configured to receive second indication information sent by the network device, where the second indication information includes the first system time; the processing unit 830 is further configured to activate the license based on the first system time; and the transceiver unit 810 is further configured to send third indication information to the network device, where the third indication information indicates an activation status of the license.

In a possible implementation, the processing unit 830 is further configured to: obtain fourth indication information sent by the network device, where the fourth indication information includes third system time of the network device, and the third system time is later than the first system time; and store the third system time.

In a possible implementation, the processing unit 830 is further configured to store the second system time when fourth indication information sent by the network device is not obtained within preset duration, where the fourth indication information includes third system time of the network device, and the third system time is later than the first system time.

In a possible implementation, the processing unit 830 is further configured to: obtain fifth indication information sent by the network device, where the fifth indication information indicates an abnormality of the second system time and a period of usage of the license; and use, based on the fifth indication information, the license to process a service within the period of usage.

In a possible implementation, the processing unit 830 is further configured to: obtain a timing periodicity of a timer, where the timer is located in the means of delivery; obtain fourth system time of the means of delivery when the timing periodicity starts; obtain fifth system time of the means of delivery when the timing periodicity ends, where the fifth system time is later than the fourth system time; and determine, based on the timing periodicity, the fourth system time, and the fifth system time, whether the second system time is abnormal.

In a design, the apparatus 800 is configured to perform an action performed by the network device in the anti-tampering protection method.

The apparatus 800 includes the processing unit 830, where the processing unit 830 is configured to: obtain first indication information sent by a means of delivery, where the first indication information includes second system time of the means of delivery; and determine, based on first system time of the network device and the second system time, whether the second system time is abnormal.

In a possible implementation, the processing unit 830 is specifically configured to: when a difference between the first system time and the second system time is less than or equal to a preset threshold, determine that the second system time is normal; and when the difference between the first system time and the second system time is greater than the preset threshold, determine that the second system time is abnormal.

In a possible implementation, the apparatus 800 further includes the transceiver unit 810. The transceiver unit 810 is configured to: send second indication information to the means of delivery, where the second indication information includes the first system time; and receive third indication information sent by the means of delivery, where the third indication information indicates an activation status of a license.

In a possible implementation, the transceiver unit 810 is further configured to: when the second system time is normal, send fourth indication information to the means of delivery, where the fourth indication information includes third system time of the network device, and the third system time is later than the first system time.

In a possible implementation, the transceiver unit 810 is further configured to: when the second system time is abnormal, send fifth indication information to the means of delivery, where the fifth indication information indicates an abnormality of the second system time and a period of usage of the license.

Optionally, if the apparatus 800 is located in the means of delivery 100, the processing unit 830 may be the processor 131 shown in FIG. 1.

FIG. 9 is a diagram of another anti-tampering protection apparatus 900 according to an embodiment of this application.

The apparatus 900 includes a memory 910, a processor 920, and a communication interface 930. The memory 910, the processor 920, and the communication interface 930 are connected through an internal connection path. The memory 910 is configured to store instructions. The processor 920 is configured to execute the instructions stored in the memory 910, to control the communication interface 930 to obtain information, so that the apparatus 900 implements the foregoing anti-tampering protection method. Optionally, the memory 910 may be coupled to the processor 920 through the interface, or may be integrated together with the processor 920.

It should be noted that the communication interface 930 uses a sending and receiving apparatus, for example, but not limited to, a sender/receiver. The communication interface 930 may further include an input/output interface (input/output interface).

The processor 920 stores one or more computer programs, and the one or more computer programs include instructions. When the instructions are run by the processor 920, the anti-tampering protection apparatus 900 is enabled to perform the anti-tampering protection methods in the foregoing embodiments.

In an implementation process, steps in the foregoing methods may be implemented by using a hardware integrated logical circuit in the processor 920, or by using instructions in a form of software. The method disclosed with reference to embodiments of this application may be directly performed by a hardware processor, or may be performed by a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 910, and the processor 920 reads information in the memory 910 and completes the steps in the foregoing methods in combination with hardware of the processor. To avoid repetition, details are not described herein again.

Optionally, the communication interface 930 in FIG. 9 may implement the transceiver unit 810 in FIG. 8, the memory 910 in FIG. 9 may implement the storage unit 820 in FIG. 8, and the processor 920 in FIG. 9 may implement the processing unit 830 in FIG. 8.

Optionally, the apparatus 800 or the apparatus 900 may be located in the means of delivery 100 in FIG. 1.

Optionally, the apparatus 800 or the apparatus 900 may be the computing platform 130 in the means of delivery in FIG. 1.

An embodiment of this application further provides a computer-readable storage medium, where the computer-readable storage medium stores program code, and when the computer program code is run on a computer, the computer is enabled to perform any method in FIG. 3 to FIG. 7.

An embodiment of this application further provides a computer program product, where the computer product includes a computer program, and when the computer program is run, a computer is enabled to perform any method in FIG. 3 to FIG. 7.

An embodiment of this application further provides a chip, including a circuit, where the circuit is configured to perform any method in FIG. 3 to FIG. 7.

An embodiment of this application further provides a means of delivery, including any anti-tampering protection apparatus shown in FIG. 8 or FIG. 9.

An embodiment of this application further provides a server, including any anti-tampering protection apparatus shown in FIG. 8 or FIG. 9.

A person of ordinary skill in the art may be aware that, with reference to examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and there may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An anti-tampering protection method, wherein the method comprises:
obtaining first system time of a network device and second system time of a means of delivery;
activating a license based on the second system time when the second system time is later than the first system time; and
sending first indication information to the network device, wherein the first indication information comprises the second system time.

2. The method according to claim 1, wherein before the obtaining first system time of a network device and second system time of a means of delivery, the method further comprises:
receiving second indication information sent by the network device, wherein the second indication information comprises the first system time;
activating the license based on the first system time; and
sending third indication information to the network device, wherein the third indication information indicates an activation status of the license.

3. The method according to claim 1 or 2, wherein the method further comprises:
obtaining fourth indication information sent by the network device, wherein the fourth indication information comprises third system time of the network device, and the third system time is later than the first system time; and
storing the third system time.

4. The method according to claim 1 or 2, wherein the method further comprises:
storing the second system time when fourth indication information sent by the network device is not obtained within preset duration, wherein the fourth indication information comprises third system time of the network device, and the third system time is later than the first system time.

5. The method according to claim 1 or 2, wherein the method further comprises:
obtaining fifth indication information sent by the network device, wherein the fifth indication information indicates an abnormality of the second system time and a period of usage of the license; and
using, based on the fifth indication information, the license to process a service within the period of usage.

6. The method according to any one of claims 1 to 5, wherein the method further comprises:
obtaining a timing periodicity of a timer, wherein the timer is located in the means of delivery;
obtaining fourth system time of the means of delivery when the timing periodicity starts;
obtaining fifth system time of the means of delivery when the timing periodicity ends, wherein the fifth system time is later than the fourth system time; and
determining, based on the timing periodicity, the fourth system time, and the fifth system time, whether the second system time is abnormal.

7. An anti-tampering protection method, wherein the method comprises:
obtaining first indication information sent by a means of delivery, wherein the first indication information comprises second system time of the means of delivery; and
determining, based on first system time of a network device and the second system time, whether the second system time is abnormal.

8. The method according to claim 7, wherein the determining, based on first system time of a network device and the second system time, whether the second system time is abnormal comprises:
when a difference between the first system time and the second system time is less than or equal to a preset threshold, determining that the second system time is normal; and
when the difference between the first system time and the second system time is greater than the preset threshold, determining that the second system time is abnormal.

9. The method according to claim 7 or 8, wherein before the receiving first indication information sent by a means of delivery, the method further comprises:
sending second indication information to the means of delivery, wherein the second indication information comprises the first system time; and
receiving third indication information sent by the means of delivery, wherein the third indication information indicates an activation status of the license.

10. The method according to any one of claims 7 to 9, wherein the method further comprises:
when the second system time is normal, sending fourth indication information to the means of delivery, wherein the fourth indication information comprises third system time of the network device, and the third system time is later than the first system time.

11. The method according to any one of claims 7 to 9, wherein the method further comprises:
when the second system time is abnormal, sending fifth indication information to the means of delivery, wherein the fifth indication information indicates an abnormality of the second system time and a period of usage of the license.

12. An anti-tampering protection apparatus, wherein the apparatus comprises a processing unit and a transceiver unit, wherein
the processing unit is configured to:
obtain first system time of a network device and second system time of a means of delivery, and
activate a license based on the second system time when the second system time is later than the first system time; and
the transceiver unit is configured to send first indication information to the network device, wherein the first indication information comprises the second system time.

13. The apparatus according to claim 12, wherein
the transceiver unit is further configured to receive second indication information sent by the network device, wherein the second indication information comprises the first system time;
the processing unit is further configured to activate the license based on the first system time; and
the transceiver unit is further configured to send third indication information to the network device, wherein the third indication information indicates an activation status of the license.

14. The apparatus according to claim 12 or 13, wherein
the processing unit is further configured to:
obtain fourth indication information sent by the network device, wherein the fourth indication information comprises third system time of the network device, and the third system time is later than the first system time; and
store the third system time.

15. The apparatus according to claim 12 or 13, wherein
the processing unit is further configured to store the second system time when fourth indication information sent by the network device is not obtained within preset duration, wherein the fourth indication information comprises third system time of the network device, and the third system time is later than the first system time.

16. The apparatus according to claim 12 or 13, wherein
the processing unit is further configured to:
obtain fifth indication information sent by the network device, wherein the fifth indication information indicates an abnormality of the second system time and a period of usage of the license; and
use, based on the fifth indication information, the license to process a service within the period of usage.

17. The apparatus according to claim 12 or 13, wherein
the processing unit is further configured to:
obtain a timing periodicity of a timer, wherein the timer is located in the means of delivery;
obtain fourth system time of the means of delivery when the timing periodicity starts;
obtain fifth system time of the means of delivery when the timing periodicity ends, wherein the fifth system time is later than the fourth system time; and
determine, based on the timing periodicity, the fourth system time, and the fifth system time, whether the second system time is abnormal.

18. An anti-tampering protection apparatus, wherein the apparatus comprises a processing unit, wherein
the processing unit is configured to:
obtain first indication information sent by a means of delivery, wherein the first indication information comprises second system time of the means of delivery; and
determine, based on first system time of a network device and the second system time, whether the second system time is abnormal.

19. The apparatus according to claim 18, wherein
the processing unit is specifically configured to:
when a difference between the first system time and the second system time is less than or equal to a preset threshold, determine that the second system time is normal; and
when the difference between the first system time and the second system time is greater than the preset threshold, determine that the second system time is abnormal.

20. The apparatus according to claim 18 or 19, wherein the apparatus further comprises a transceiver unit, wherein
the transceiver unit is configured to:
send second indication information to the means of delivery, wherein the second indication information comprises the first system time; and
receive third indication information sent by the means of delivery, wherein the third indication information indicates an activation status of the license.

21. The apparatus according to claim 20, wherein
the transceiver unit is further configured to: when the second system time is normal, send fourth indication information to the means of delivery, wherein the fourth indication information comprises third system time of the network device, and the third system time is later than the first system time.

22. The apparatus according to claim 20, wherein
the transceiver unit is further configured to: when the second system time is abnormal, send fifth indication information to the means of delivery, wherein the fifth indication information indicates an abnormality of the second system time and a period of usage of the license.

23. An anti-tampering protection apparatus, comprising a processor and a memory, wherein the processor is coupled to the memory, and is configured to read and execute instructions in the memory, to perform the method according to any one of claims 1 to 6.

24. An anti-tampering protection apparatus, comprising a processor and a memory, wherein the processor is coupled to the memory, and is configured to read and execute instructions in the memory, to perform the method according to any one of claims 7 to 11.

25. A computer-readable storage medium, wherein the computer-readable storage medium stores program code, and when the computer program code is run on a computer, the computer is enabled to perform the method according to any one of claims 1 to 11.

26. A chip, comprising a circuit, wherein the circuit is configured to perform the method according to any one of claims 1 to 11.

27. A means of delivery, wherein the means of delivery comprises the anti-tampering protection apparatus according to any one of claims 12 to 17.

28. A server, wherein the server comprises the anti-tampering protection apparatus according to any one of claims 18 to 22.
